# EUROPEAN PATENT APPLICATION

(11) **EP 4 671 512 A1**
(43) Date of publication of application: **31.12.2025**
(21) Application number: 24183994.3
(22) Date of filing: 24.06.2024
(51) Int. Cl.: F01P 11/02, B60K 11/02, F01P 11/04, H01M 10/60, H01M 8/04029, B60K 1/00

(54) **DEVICE AND METHOD FOR EXCHANGING VEHICLE FLUIDS**

(71) Applicant: VOLVO TRUCK CORPORATION, 405 08 Göteborg (SE)
(72) Inventor: ÖSTMAN, Bill, 436 57 HOVÅS (SE); ÖJERGREN, Johan, 442 37 KUNGÄLV (SE); LANDVIK, Sondre, 417 61 GÖTEBORG (SE)
(74) Representative: Ström & Gulliksson AB

(57) **Abstract**

A device (1) for exchanging vehicle fluids (111, 121), comprising
- a first fluid port (10) to connect to a first assembly (110) of a vehicle (100), the first assembly (110) containing a first vehicle fluid (111),
- a second fluid port (20) to connect to a second assembly (120) of the vehicle (100), the second assembly (120) containing a second vehicle fluid (121),
- a first fluid control arrangement (12) configured to selectively permit fluid flow from the first assembly (110) to the first fluid port (10) and to selectively permit fluid flow from the first fluid port (10) to the first assembly (110), and
- a second fluid control arrangement (22) configured to selectively permit fluid flow from the second assembly (120) to the second fluid port (20) and to selectively permit fluid flow from the second fluid port (20) to the second assembly (120).

## Description

### TECHNICAL FIELD

The disclosure relates generally to exchanging vehicle fluids. In particular aspects, the disclosure relates to a device for exchanging vehicle fluids and to method of exchanging vehicle fluids. The disclosure can be applied to any vehicle, for example battery electric vehicles or internal combustion engine vehicles, both vehicle types also including also heavy-duty vehicles, such as trucks, buses, and construction equipment. Although the disclosure may be described with respect to a particular vehicle, the disclosure is not restricted to any particular vehicle.

### BACKGROUND

Various systems of a vehicle require a fluid for operation of the systems. In order to ensure proper operation, such fluids need to be periodically exchanged. For example, energy storage systems of heavy-duty vehicles, such as battery packs and fuel cell arrangements, normally require cooling in order to control the operating temperature. Such cooling systems may comprises a coolant which is circulated in the energy storage system to transport heat away from the energy storage system.

### SUMMARY

According to a first aspect of the disclosure, there is provided a device for exchanging vehicle fluids. The device comprises a first fluid port to connect to a first assembly of a vehicle, the first assembly containing a first vehicle fluid. The device further comprises a second fluid port to connect to a second assembly of the vehicle, the second assembly containing a second vehicle fluid. The device further comprises a first fluid control arrangement configured to selectively permit fluid flow from the first assembly to the first fluid port and to selectively permit fluid flow from the first fluid port to the first assembly, and a second fluid control arrangement configured to selectively permit fluid flow from the second assembly to the second fluid port and to selectively permit fluid flow from the second fluid port to the second assembly. The first aspect of the disclosure may seek to solve the problem of exchanging vehicle fluids, especially when the vehicle fluids are contained in relatively complex vehicle fluid systems. Further, the device may allow exchanging fluids of various systems of various vehicles, without need for manual inputs or specific settings. A technical benefit may include a partly of fully automated fluid exchange. A further technical benefit may include ensuring that a correct amount of fluid is refilled into a drained system.

The device may alternatively be referred to as a device or tool for controlled drain and fill of complex vehicle fluid systems. Typically, the fluid may be a coolant, and thus the device may be referred to as a device or tool for controlled drain and fill of complex thermal system.

Optionally in some examples, including in at least one preferred example, the device comprises a controller configured to control the first and second fluid control arrangements. The controller or the first fluid control arrangement may further be configured to measure a first drain amount of fluid from the first assembly to the first fluid port, and to measure a first fill amount of fluid from the first fluid port to the first assembly. A technical benefit may include keeping track of the first drain amount and the first fill amount. For example, the device may ensure that that the first fill amount substantially equals the first drain amount. In some examples, a deviation between the fill and drain amounts of a few percent, such than up to five percent, may be acceptable. In this disclosure, fluid amounts that are substantially equal may be equal or may deviate from one another by up to five percent.

Optionally in some examples, including in at least one preferred example, the controller is configured to control the first fluid control arrangement such that the first fill amount substantially equals the first drain amount. A technical benefit may include that the device automatically ensures that that the first fill amount substantially equals the first drain amount. Thereby, continued correct function of the first assembly is ensured, with no need for any manual input as regards the first fill amount. This approach is based on the first assembly containing a correct amount of first fluid before the fluid exchange is initiated. The present disclosure does not exclude that e.g. the controller may be configured to display or in another way convey the first drain amount and/or the first fill amount to e.g. a service technician, to enable a verification of a correct fill amount after the fluid exchange. Furthermore, data regarding the first drain amount may provide useful information to a service technician, as it may for example indicate leak or malfunction of the first assembly.

Optionally in some examples, including in at least one preferred example, the controller or the first fluid control arrangement is configured to measure a first drain rate from the first assembly to the first fluid port, and to measure a first fill rate from the first fluid port to the first assembly. A technical benefit may include that the first fill and/or drain rate may provide information relating to the function of the first assembly, for example regarding a possible restrained fluid flow. Further, it may be desired to fill the first assembly at the substantially the same rate as it was drained. In some applications, a too high fill rate may be disadvantageous and may for example cause damages. In this disclosure, fill and drain rates that are substantially equal may be equal or may deviate from one another by up to five percent.

Optionally in some examples, including in at least one preferred example, the controller is configured to control the first fluid control arrangement such that the first fill rate substantially equals the first drain rate. Again, referring to the above paragraph, in some applications it may be desired to fill the first assembly at the substantially the same rate as it was drained.

Optionally in some examples, including in at least one preferred example, the controller or the second fluid control arrangement is configured to measure a second drain amount of fluid from the second assembly to the second fluid port, and to measure a second fill amount of fluid from the second fluid port to the second assembly. A technical benefit may include keeping track of the second drain amount and the second fill amount. For example, the device may ensure that that the second fill amount substantially equals the second drain amount. Thus, the device may ensure that that the first fill amount substantially equals the first drain amount and that the second fill amount substantially equals the second drain amount.

Optionally in some examples, including in at least one preferred example, the controller is configured to control the second fluid control arrangement such that the second fill amount substantially equals the second drain amount. A technical benefit may include that the device automatically ensures that that the second fill amount substantially equals the second drain amount. Similar to the first fill and drain amounts, the present disclosure does not exclude that e.g. the controller may be configured to display or in another way convey the second drain amount and/or the second fill amount to e.g. a service technician.

Optionally in some examples, including in at least one preferred example, the device, e.g. a controller of the device, is configured to measure a total drain amount that comprises a first drain amount of fluid drained from the first assembly to the first fluid port and a second drain amount of fluid drained from the second assembly to the second fluid port. The total drain amount may be the sum of the first and second drain amounts. The device may comprise a greater number of fluid ports to connect to a greater number of assemblies of the vehicle. Thus, there may be a third fluid port to connect to a third assembly of a vehicle, the third assembly containing a third vehicle fluid and a fourth fluid port to connect to a fourth assembly of a vehicle, the fourth assembly containing a fourth vehicle fluid and so on. The total drain amount may be the sum of the drain amounts from all assemblies.

Optionally in some examples, including in at least one preferred example, the device is configured to fill a total fill amount that comprises a first fill amount of fluid filled from the first fluid port to the first assembly and a second fill amount of fluid filled from the second fluid port to the second assembly, wherein the total fill amount is at least 95 percent of the total drain amount. In such example, the first and second vehicle fluids may be one and the same fluid, such as a coolant. Referring to the above paragraph, the total fill amount may be the sum of the fill amounts to all assemblies.

Optionally in some examples, including in at least one preferred example, the controller or the second fluid control arrangement is configured to measure a second drain rate from the second assembly to the second fluid port, and to measure a second fill rate from the second fluid port to the second assembly. Referring to the discussion on the first fill rate, in some applications it may be desired to fill the second assembly at the substantially the same rate as it was drained. Furthermore, information regarding a ratio between the first drain rate and the second drain rate may be of use to a service technician, for example as it may be indicative of a possible restrained fluid flow.

Optionally in some examples, including in at least one preferred example, the controller is configured such that a drain ratio between the first drain rate and the second drain rate substantially equals a fill ratio between the first fill rate and the second fill rate. As an example, the first drain rate may be twice the second drain rate, and, correspondingly, the first fill rate may be twice the second fill rate.

Optionally in some examples, including in at least one preferred example, the first fluid control arrangement is configured to measure a pressure of the fluid flow from the first fluid port to the first assembly, the second fluid control arrangement is configured to measure a pressure of the fluid flow from the second fluid port to the second assembly. A technical benefit may include that monitoring the pressures, e.g. to detect pressure spikes, may provide useful information regarding the drain flows. For example, a sudden pressure drop may be indicative of an assembly being emptied of fluid. The first and second fluid control arrangements may be controlled based on the pressures of said fluid flows.

Optionally in some examples, including in at least one preferred example, the vehicle comprises a fluid manifold to which the first assembly and the second assembly are connected, the fluid manifold having a manifold bleed valve, the device comprises a supplementary fluid port to connect to the fluid manifold, and the device is configured to selectively permit a fluid flow from the first fluid port to the first assembly or permit a fluid flow from the supplementary fluid port to the first assembly via the fluid manifold. A technical benefit may include that the first assembly may be supplied with fluid from the first fluid port and also from the supplementary fluid port. Thus, should it for some reason not be possible to fill a desired amount of fluid to the first assembly from the first fluid port, fluid may instead be supplied to the first assembly from the supplementary fluid port. Furthermore, undesired air that is present in the first assembly may be cleared out via the first fluid port or the supplementary fluid port. As an alternative, the second fluid port instead of the supplementary fluid port may be connected to the fluid manifold. In such an alternative, the first assembly may be supplied with fluid from the first fluid port and also from the second fluid port.

Optionally in some examples, including in at least one preferred example, the vehicle fluids are coolants. Further, the first assembly may be a first battery unit, the second assembly may be a second battery unit. The device may comprises an electric input for connection to an electrical power source. Thereby, the first and second fluid control arrangement may be electrically powered. The first assembly may alternatively be referred to as a first fluid container, and the second assembly may alternatively be referred to as a second fluid container.

The fluid control arrangements may include pumps and may thus be configured to cause a fluid flow. In other words, the device may comprise a first fluid control arrangement configured to cause a fluid flow from the first assembly to the first fluid port and to cause a fluid flow from the first fluid port to the first assembly, and a second fluid control arrangement configured to cause a fluid flow from the second assembly to the second fluid port and to case a fluid flow from the second fluid port to the second assembly. The pumps may be configured to pump liquids and gas. Thus, the pumps may be configured to suck gas and liquid from the assemblies. The fluid control arrangements may include pumps and valves. In some examples, including in at least one preferred example, the fluid control arrangements may comprise or consist of valves. In the latter examples, fluid flow may be caused by other pumps or by gravity.

According to a second aspect of the disclosure, there is provided a method of exchanging vehicle fluids using a device for exchanging vehicle fluids. The device comprises a first fluid port to connect to a first assembly of a vehicle, a second fluid port to connect to a second assembly of the vehicle, a first fluid control arrangement configured to selectively permit fluid flow to and from the first assembly from and to the first fluid port, and a second fluid control arrangement configured to selectively permit fluid flow to and from the second assembly from and to the second fluid port. The method comprises first draining a first vehicle fluid from the first assembly to the first fluid port, second draining a second vehicle fluid from the second assembly to the second fluid port, first filling a fluid from the first fluid port to the first assembly, and second filling a fluid from second fluid port to the second assembly. As regards problems solved by the second aspect, and additional possible features and associated advantages, reference is made to the herein provided claims and description related to the first aspect.

Optionally, the method is computer-implemented. According to a further aspect of the disclosure, there is provided a computer program product comprising program code for performing, when executed by a processor device of a controller, the computer-implemented method of operating a vehicle fuel cell system assembly. According to a yet further aspect of the disclosure, there is provided a non-transitory computer-readable storage medium comprising instructions, which when executed by a processor device of a controller, cause the processing circuitry to perform the computer-implemented method of operating a vehicle fuel cell system assembly. As regards problems solved by these further aspects, and additional possible features and associated advantages, reference is made to the herein provided claims and description related to the first aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary view of a vehicle comprising three assemblies containing vehicle fluids and a device for exchanging said fluids according to an example.
**FIG. 2** is an exemplary view of a part of the device of **FIG. 1** together with assemblies in the form of batteries containing a fluid in the form of a coolant.
**FIG. 3** corresponds to **FIG. 2** and illustrates a first battery being filled with a coolant.
**FIG. 4** is a flow diagram illustrating an exemplary method of exchanging vehicle fluids.
**FIG. 5** is an exemplary view of a part of the device of **FIG. 1** together with three assemblies containing vehicle fluids according to an example.
**FIG. 6** corresponds to **FIG. 5** and illustrates air (encircled) to be cleared out.
**FIG. 7** to **FIG. 9** are exemplary views of a graphical user interface, GUI, of the device for exchanging vehicle fluids of **FIG. 1****.**
**FIG. 10** is an exemplary logic diagram of a controller for performing examples disclosed herein.
**FIG. 11** is a schematic diagram of an exemplary computer system for implementing examples disclosed herein.

### DETAILED DESCRIPTION

The detailed description set forth below provides information and examples of the disclosed technology with sufficient detail to enable those skilled in the art to practice the disclosure.

In traditional diesel vehicles a mechanic or service technician connects a hose to a coolant drain valve on the lower side of a radiator, removes an expansion tank cap, and activates a drain function on a draining tool. If a retarder is present on the driveline of the vehicle, the service technician may connects a hose to a coolant drain valve on the lower side of the retarder. This is a rather uncomplicated procedure that a service technician is familiar with, and it can be part of a preparation measure before starting a repair work. The coolant draining can be initiated, and the service technician can take a break or do other work as the vehicle drains itself. After the repair work is done on the vehicle, the coolant is pumped back to the vehicle the same way it was let out. A similar procedure may be used for a regular service interval, e.g. 48 months, coolant exchange, but here the coolant that is put back to the vehicle is new coolant.

When it comes to more complex vehicle fluid systems such as complex thermal systems, as those typically found in BEVs (Battery Electric Vehicles), PHEVs (Plug-in Hybrid Electric Vehicles), and fuel-cell vehicles, the coolant can typically not be drained and filled as easily. The present disclosure generally relates to controlled drain and fill of complex vehicle fluid systems, such as vehicle thermal systems that comprise a coolant. Preferably with automatic fault tracing, and the possibility to use air pressure to facilitate draining and filling. Disclosed herein is a device or tool for draining, storing, and filling back coolant (fluid) during maintenance work on a vehicle with an advanced thermal system. Alternatively, the coolant may be exchanged which means that a drained coolant is not filled back but replaced with new coolant. The device or tool may be tool to be connected between the vehicle and existing workshop coolant draining and filling equipment.

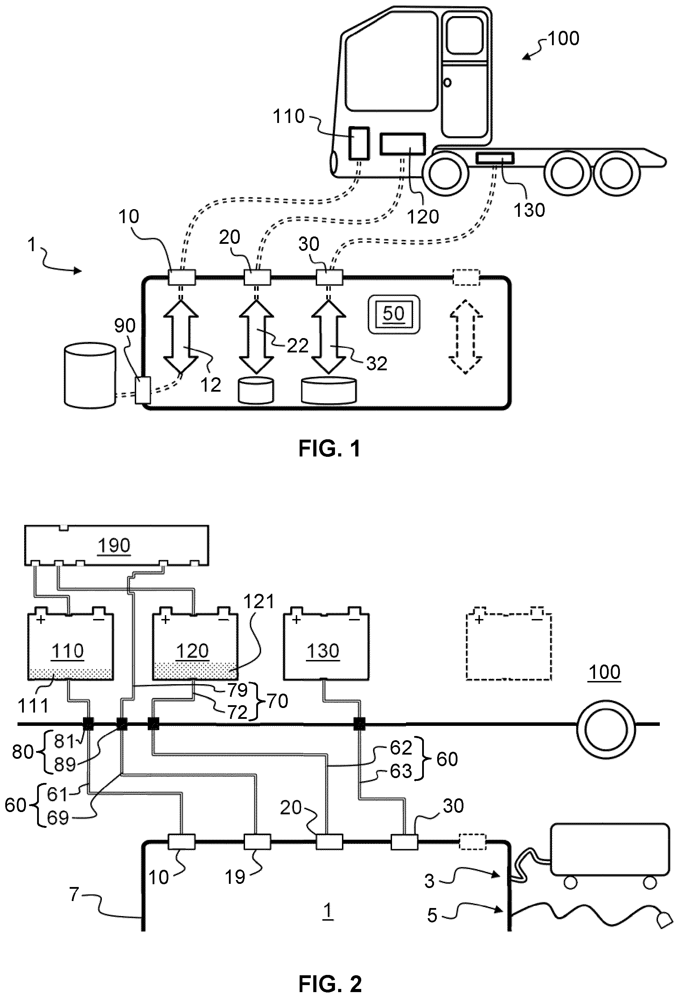

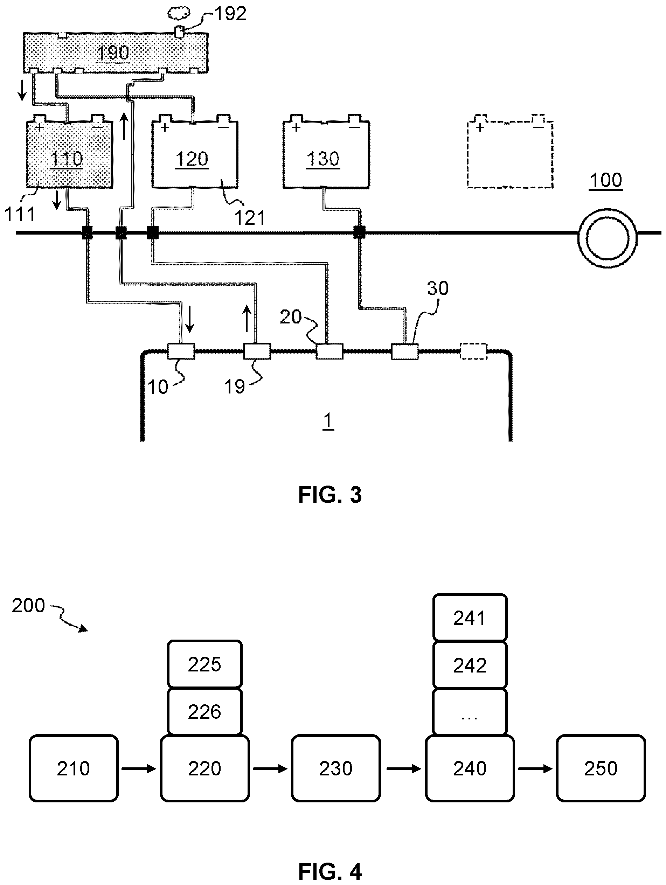

**FIG. 1** to **FIG. 6** show a device 1 and a method 200 for exchanging vehicle fluids 111, 121. The device 1 comprises a first fluid port 10 to connect to a first assembly 110 or fluid container of a vehicle 100. The vehicle 100 may be a heavy-duty vehicle such as a truck, see **FIG. 1****.** The first assembly 110 contains a first vehicle fluid 111, such as a coolant. The device 1 further comprises a second fluid port 20 to connect to a second assembly 120 of the vehicle 100, the second assembly 120 containing a second vehicle fluid 121. The second vehicle fluid 121 may be a coolant, e.g. the same coolant as the first vehicle fluid 111. The first and second assemblies 110, 120 may be fluidly connected to one another, as is exemplifies in **FIG. 3****.**

The device 1 further comprises a first fluid control arrangement 12 configured to selectively permit fluid flow from the first assembly 110 to the first fluid port 10 and to selectively permit fluid flow from the first fluid port 10 to the first assembly 110. Similarly, the device 1 comprises a second fluid control arrangement 22 configured to selectively permit fluid flow from the second assembly 120 to the second fluid port 20 and to selectively permit fluid flow from the second fluid port 20 to the second assembly 120.

Even though not shown in detail, the control arrangements 12, 22 may be or comprise pumps and valves. For example, the first fluid control arrangement 12 may comprise an undepicted first valve that may be opened to drain fluid from the first assembly 110. In addition, the first fluid control arrangement 12 may comprise an undepicted first pump that may be operated to pump fluid to the first assembly 110. The second fluid control arrangement 22 may also comprise a valve and/or a pump.

The device 1 may comprise a controller 50, as indicated in **FIG. 1****.** The controller 50 may be configured to control the first and second fluid control arrangements 12, 22. However, the present disclosure does not exclude there instead being a separate controller connected to the device 1 for control thereof as described herein. The controller 50, or the first fluid control arrangement 12, may be configured to measure a first drain amount of fluid from the first assembly 110 to the first fluid port 10, and to measure a first fill amount of fluid from the first fluid port 10 to the first assembly 110. The first fill and drain amounts may e.g. be measured by an undepicted flow meter. In alternative, the first fill and drain amounts may be obtained from the controller 50, or the first fluid control arrangement 12, controlling the pump.

The controller 50 may be configured to control the first fluid control arrangement 12 such that the first fill amount substantially equals the first drain amount. In other words, the controller 50 (or the first fluid control arrangement 12) may measure or be informed of the first drain amount and subsequently control the first fluid control arrangement 12 such that the substantially the same amount is filled back to the first assembly 110.

The controller 50 or the first fluid control arrangement 12 may be configured to measure a first drain rate from the first assembly 110 to the first fluid port 10, and to measure a first fill rate from the first fluid port 10 to the first assembly 110. The drain rate may e.g. be obtained or calculated from the fluid flow, by dividing a flow amount by the time needed for the amount to flow.

The controller 50 may be configured to control the first fluid control arrangement 12 such that the first fill rate substantially equals the first drain rate. In other words, the controller 50 may keep track of the first drain rate and apply substantially the same rate when filling the first assembly 110.

Similarly as has been described in relation to the first drain amount, the controller 50 or the second fluid control arrangement 22 may be configured to measure a second drain amount of fluid from the second assembly 120 to the second fluid port 20, and to measure a second fill amount of fluid from the second fluid port 20 to the second assembly 120. Furthermore, the controller 50 may be configured to control the second fluid control arrangement 22 such that the second fill amount substantially equals the second drain amount.

Referring e.g. to **FIG. 3****,** the first and second fluids 111, 121 may be the same fluid, typically a coolant. The first and second assembles 110, 120 may be fluidly connected, e.g. via a fluid manifold 190. It may in many applications not be important through which fluid port of the deceive 1 the fluid exchange occurs, as long as the same amount of fluid is drained and filled.

Thus, the device 1 may be configured to measure a total drain amount that comprises a first drain amount of fluid drained from the first assembly 110 to the first fluid port 10 and a second drain amount of fluid drained from the second assembly 120 to the second fluid port 20. Then, the device 1 may be configured to fill a total fill amount that comprises a first fill amount of fluid filled from the first fluid port 10 to the first assembly 110 and a second fill amount of fluid filled from the second fluid port 20 to the second assembly 120. The total fill amount may be the same as the total drain amount, or the total fill amount may be at least 95 or at least 98 percent of the total drain amount.

Similarly as has been described in relation to the first drain rate, the controller 50 or the second fluid control arrangement 22 may be configured to measure a second drain rate from the second assembly 120 to the second fluid port 20, and to measure a second fill rate from the second fluid port 20 to the second assembly 120. The controller 50 may be configured such that a drain ratio between the first drain rate and the second drain rate substantially equals a fill ratio between the first fill rate and the second fill rate.

The first fluid control arrangement 12 may be configured to measure a pressure of the fluid flow from the first fluid port 10 to the first assembly 110. Further, the second fluid control arrangement 22 may be configured to measure a pressure of the fluid flow from the second fluid port 20 to the second assembly 120. One or both pressured, which may be referred to as a first and a second pressure, may be measured using undepicted pressure sensors. In alternative, pressure data may be obtained from the controller 50, or the first fluid control arrangement 12, controlling the pump or an undepicted pressure generating assembly (e.g. an air valve, a compressor, or a vacuum ejector, as exemplified herein).

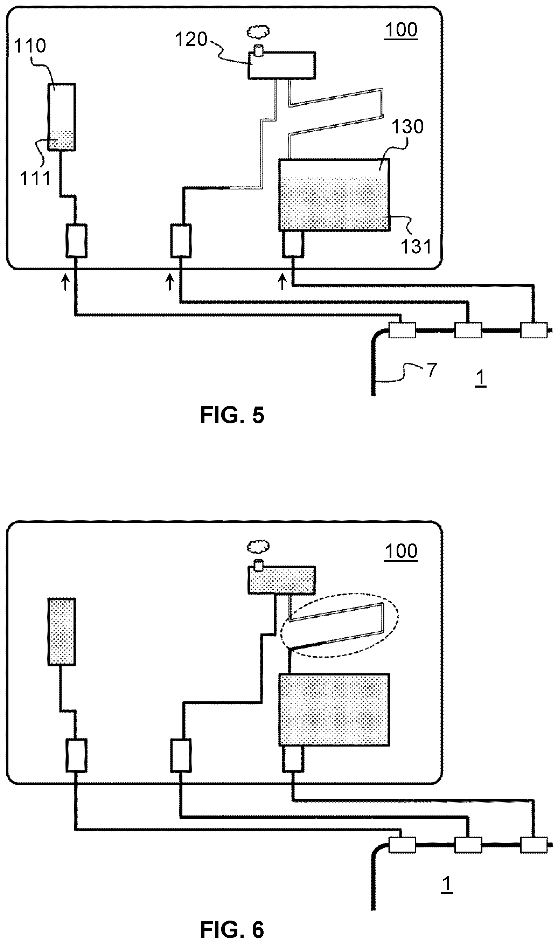

Referring e.g. to **FIG. 2** and **FIG. 3****,** the vehicle 100 may comprise a fluid manifold 190 to which the first assembly 110 and the second assembly 120 are connected. In such a manner, the first and second assemblies 110, 120 may be fluidly connected to one another. However, the first and second assemblies 110, 120 may alternatively be directly connected to one another, as exemplified in **FIG. 5** and **FIG. 6****.** Thus, the first and second assemblies 110, 120 may be directly or indirectly fluidly connected to one another. By the first and second assemblies 110, 120 being fluidly connected to one another is meant that the assemblies are interconnected by other means than via the device 1. The fluid manifold 190 may comprise a manifold bleed valve 192, see **FIG. 3****.** One or more bleed valves may alternatively, or in addition, be comprised in the first assembly 110, the second assembly 120 (see **FIG. 5**), or fluid hoses or fluid pipes connecting the assemblies to one another.

Referring still to **FIG. 2** and **FIG. 3****,** the device 1 may comprise a supplementary fluid port 19 to connect to the fluid manifold 190 wherein the device 1 is configured to selectively permit a fluid flow from the first fluid port 10 to the first assembly 110 or permit a fluid flow from the supplementary fluid port 19 to the first assembly 110 via the fluid manifold 190.

As has been mentioned, the vehicle fluids 111, 121 may be coolants, such as one and the same coolant. The first assembly 110 may be a first battery unit, the second assembly 120 may be a second battery unit.

As is shown in **FIG. 2****,** the device 1 may comprise an electric input 5 for connection to an electrical power source. As is indicated, the electric input 5 may comprise a power cord with a plug for connection to an undepicted socket of electrical power source (e.g. mains).

As is also shown in **FIG. 2****,** the device 1 may comprise a pneumatic input 3 for connection to a schematically indicated compressor and the device 1 may be configured to supply pressurized air from the first fluid port 10 to the first assembly 110 or from the second fluid port 20 to the second assembly 120. The device 1 may in addition comprise a second pneumatic input for connection to an under pressure and the device 1 may be configured to supply an under pressure from the first fluid port 10 to the first assembly 110 or from the second fluid port 20 to the second assembly 120. Alternatively, the device 1 may comprise a vacuum ejector such that the device 1 may generate an under pressure from the overpressure of the pneumatic input 3 (that may be connected to a compressor). The device 1 may further comprise one or more undepicted air valves to control overpressures and under pressures. Typically, service technicians have access to compressors, such that typically the device 1 needs not be furnished with means for generating an under or overpressure. Pressurized (over or under) air may e.g. be used to drain fluid from the assemblies 110, 120.

Referring to **FIG. 1****,** the device 1 may comprise a reservoir fluid port 90 to connect to a coolant reservoir (indicated as a barrel to the left in **FIG. 1**). In addition, or alternatively, the device 1 may comprise one or more internal reservoirs (two shown in **FIG. 1****)** for receiving fluids drained from the vehicle 100.

Referring especially to **FIG. 2****,** the tool or device 1 may comprise a housing 7. External hoses 60 may be connected between the fluid ports 10, 20, ... of the device 1 and the assemblies 110, 120, ... of the vehicle 100. As is shown, there may be internal pipes or hoses 70 that connect a respective assembly 110, 120, ... to a respective fluid valve 81, 82, ... of the vehicle 100.

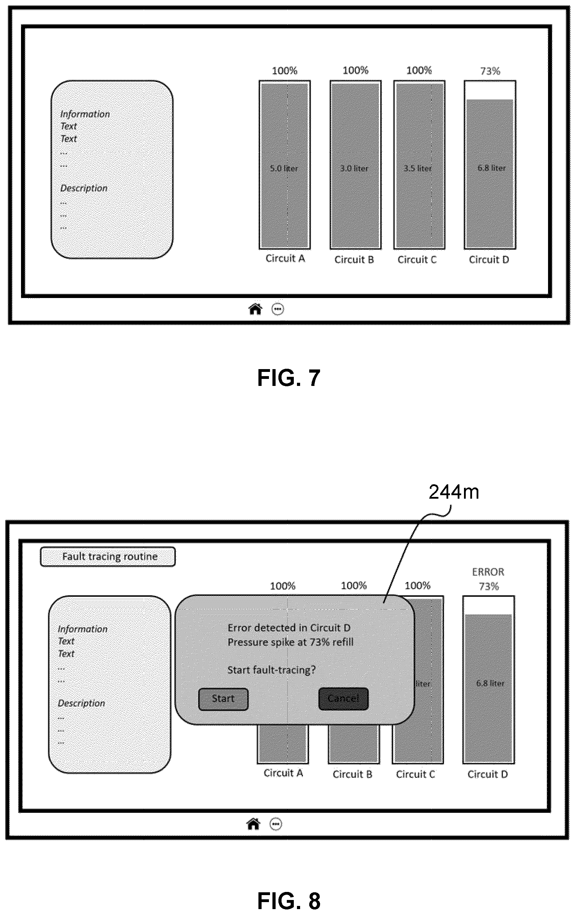

**FIG. 4** illustrates steps of a method 200 of exchanging vehicle fluids using the device 1. **FIG. 5** to **FIG. 9** are provided to facilitate understanding of the method 200. The circuits A-D mentioned in **FIG. 7** to **FIG. 9** correspond to the assemblies 110, 120, 130, 190, ... of e.g. **FIG. 1****.** In some detail, a circuit may comprise not only an assembly per se, but also internal and external hoses 70, 60 connected to the assembly.

Initially, the method 200 may comprise connecting 210 the first fluid port 10 to the first assembly 110 and the second fluid port 20 to the second assembly 120. There may be a greater number of fluid ports to be connected to a greater number of assemblies. Further, one assembly may be connected, directly or indirect, to two fluid ports. Referring again to **FIG. 2****,** the fluid ports 10, 19, 20, 30 may be connected to the assemblies via external hoses 60, fluid valves 80, and internal hoses 70.

The method comprises first draining 220 the first vehicle fluid 111 from the first assembly 110 to the first fluid port 10, second draining 230 the second vehicle fluid 121 from the second assembly 120 to the second fluid port 20, first filling 240 a fluid from the first fluid port 10 to the first assembly 110, and second filling 250 a fluid from second fluid port 20 to the second assembly 120.

The expressions first draining 220 and second draining 230 are not used to indicate any particular order, but only that first draining 220 refers to the draining first assembly 110 whereas second draining 230 refers to draining the second assembly 120. The first draining 220 may be initiated before, after, or simultaneously as the second draining 230.

As is clear from the herein provided description of the device 1, first draining 220 the first vehicle fluid 111 from the first assembly 110 to the first fluid port 10 may comprise measuring the drain amount of first vehicle fluid 111. Further, first filling 240 a fluid from the first fluid port 10 to the first assembly 110 may comprise measuring the filled amount of fluid.

According to examples of the method 200, first draining 220 the first vehicle fluid 111 from the first assembly 110 to the first fluid port 10, and second draining 230 the second vehicle fluid 121 from the second assembly 120 to the second fluid port 20, may be initiated simultaneously. The method may thus ensure an effective and quick draining of the first and second assemblies 110, 120.

First filling 240 a fluid from the first fluid port 10 to the first assembly 110, and second filling 250 a fluid from second fluid port 20 to the second assembly 120 may be initiated consecutively or simultaneously. In some examples, a consecutive filling may be advantageous to prevent or clear out undesired air. In some examples, a simultaneous filling may be possible and time effective.

As has been mentioned, the vehicle 100 may comprise a fluid manifold 190 to which the first assembly 110 and the second assembly 120 are connected. The fluid manifold 190 may have a manifold bleed valve 192, through which undesired air may be let out. The device 1 may comprise a supplementary fluid port 19 for connection to the fluid manifold 190, and according to examples of the method 200 first filling 240 a fluid from the first fluid port 10 to the first assembly 110 comprises alternatingly filling the first assembly 110 via the first fluid port 10 and via the supplementary fluid port 19.

Referring still to **FIG. 4****,** first draining 220 the first vehicle fluid 111 from the first assembly 110 to the first fluid port 10 may comprise supplying 225 pressurized gas, such as air, to the first assembly 110. Thereby, a relatively quick and complete draining may be facilitated or obtained. Supplying 225 pressurized gas to the first assembly 110 may comprises supplying 225 pressurized gas to the first assembly 110 via another port than the first fluid port 10. Such other port may e.g. be the second fluid port 20 or the supplementary fluid port 19.

First filling 240 a fluid from the first fluid port 10 to the first assembly 110 may comprises first pressure measuring 241 a pressure of the fluid flow from first fluid port 10 to the first assembly 110. Further, first filling 240 a fluid from the first fluid port 10 to the first assembly 110 may comprise first detecting 242 a pressure anomaly, e.g. a sudden increase or decrease in pressure, based on the first pressure measuring 241. As a result, first filling 240 a fluid from the first fluid port 10 to the first assembly 110 may comprise first stopping 243 the first filling based on the first detecting 242. As is exemplified in **FIG. 8****,** first filling 240 a fluid from the first fluid port 10 to the first assembly 110 may comprise first generating 244 a first message to an operator in connection with first stopping 243 the first filling.

First filling 240 a fluid from the first fluid port 10 to the first assembly 110 may comprise first alternatingly filling 245 the first assembly 110 via another port of the device 1. **FIG. 5** illustrates the first to third assemblies 110, 120, 130 being filled simultaneously via a respective fluid port of the device 1. **FIG. 6** illustrates the filling of the first to third assemblies 110, 120, 130 being completed. However, there is undesired air (encircled in **FIG. 6**), or an air pocket, present in the fluid system of the vehicle 100. More precisely, the undesired air is here as an example present in an internal pipe or hose that connects the first assembly 110 to the second assembly 120. It is to be apprehended that undesired air may be present at other locations within the fluid system of the vehicle 100, such as within an assembly 110, 120, ..... By alternatingly filling 245 an assembly, in the example of **FIG. 6** the second assembly 120, the undesired air may be clear out e.g. via bleed valve or via a fluid port.

In some detail, simultaneous filling of a number of assemblies is illustrated in **FIG. 5****.** In **FIG. 7** a GUI of the device 1, or of an external unit such as a computer that is connected to the device 1, illustrates how a number of circuits A-C have been completely filled, while one circuit D has been incompletely filled to 73 percent. The illustrations are schematic and **FIG. 5** and **FIG. 6** illustrate three circuits while **FIG. 7** to **FIG. 9** illustrate four circuits.

The device 1, typically its controller 50, may detect that a complete filling of one circuit, in the present example circuit D, is not possible. Such detection may for example be the result of that a sudden pressure increase, meaning that the circuit (including hoses and assemblies of the circuit) does not accept further liquid filling but instead there is a sudden pressure increase. For example, it may be detected that a fill amount is not substantially equal to a corresponding drain amount. The device 1 (or controller 50) may new stop 243 the fluid flow to the concerned circuit and generate 244 a first message 244m to an operator or service technician, see **FIG. 8****.** As is shown, the service technician may, using the GUI, choose to start a fault-tracing procedure. In other examples, the fault-tracing procedure may be automatically initiated.

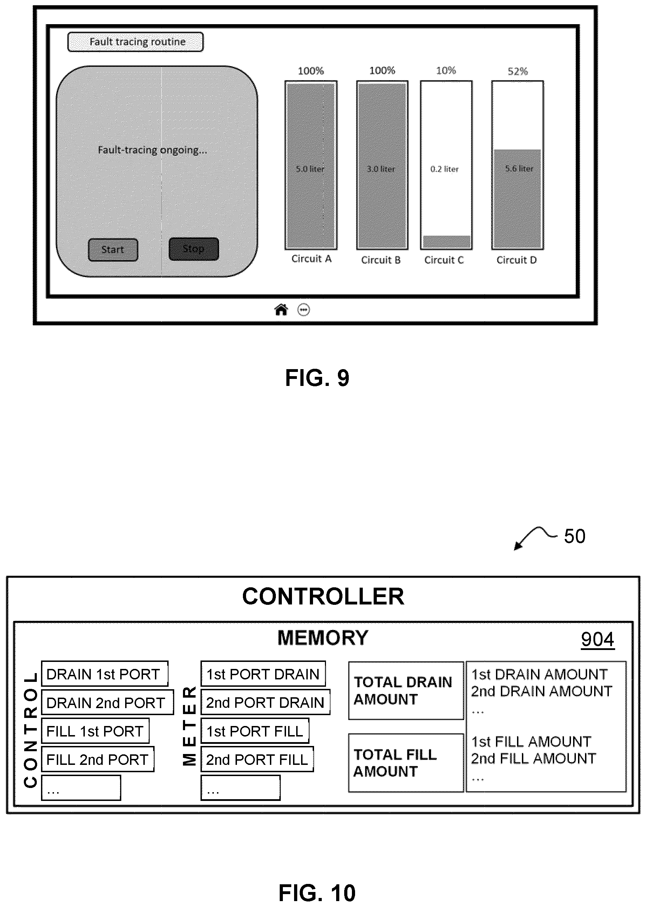

The a fault-tracing procedure may comprise automatically draining **(****FIG. 9****)** one or more circuits and subsequently attempt to re-fill a total drain amount via the available fluid ports 10, 19, 20, 30, .... For example, if the device 1 is unable to fill the fluid system of the vehicle 1 via a certain fluid port, the device 1 may attempt to instead fill then fluid system via a neighboring fluid port. In case of unsuccessful filling, the device 1 may next attempt to fill via a next neighboring fluid port and so on. The device 1 may further automatically supply pressurized air the fluid ports in succession, in order to clear out any air pockets or objects that block fluid passage.

Further the method 200 may comprise generating 226, 246 an undepicted bleed message to an operator in connection with first draining 220 the first vehicle fluid 111 from the first assembly 110 to the first fluid port 10, or in connection with first filling 240 a fluid from the first fluid port 10 to the first assembly 110. The bleed message may inform a service technician to open a bleed valve.

As mentioned in connection with the description of the device 1 and with reference to **FIG. 7** to **FIG. 9****,** the method 200 may comprise measuring a total drain amount that comprises a first drain amount of fluid drained from the first assembly 110 to the first fluid port 10 and a second drain amount of fluid drained from the second assembly 120 to the second fluid port 20. The method 200 may further comprise filling a total fill amount that comprises a first fill amount of fluid filled from the first fluid port 10 to the first assembly 110 and a second fill amount of fluid filled from the second fluid port 20 to the second assembly 120, wherein the total fill amount is at least 95 percent of the total drain amount. The device 1 may automatically attempt to fill the total fill amount using all fluid ports available.

The device 1 may be adapted to be controlled through the GUI using buttons and/or a touch screen, and/or through a computer connected to the device 1. Alternatively, the device 1 may also be controlled through the vehicle's 100 cluster. The function of knowing the fluid amount that has passed through each fluid port 10, 20, ... may be useful when filling fluid (the same fluid or new fluid) back to the fluid system. By means of the device 1, each fluid port 10, 20, ... may automatically reverse the same amount of fluid with same velocity (rate) as during drained. This is useful, and potentially critic for complex fluid systems, such a coolant systems, where air pockets could arise if the fluid is filled from other directions.

If the device 1 configured to measure a the pressures, as described herein, the device 1 may detect if there are issues with sudden changes of pressure; deviation to high or low pressures e.g. meaning that a hose is disconnected or blocked. An automatic action of the device 1 may be applying a test pulse of extra pressure or short break of the fluid flow. If as a result the fluid then flows normally the device 1 may continue with the present draining or filling. If the pressure deviation is not mitigated, the device 1 may pause the activity and poke for the service technicians attention **(****FIG. 8****).**

The present disclosure is thus directed to a multi-channel device 1 for draining and filling multiple fluid containers (assemblies 110, 120, 130, ...). The fluid containers may be interconnected with one another, such that a certain container may be filled and from at least two directions (connected fluid ports). If upon refilling, one of the fluid containers refills less than expected outside of a predetermined threshold (e.g., due to an air pocket blocking fluid flow), the device 1 or method 200 may automatically overfill one or more of the other fluid containers and monitor total fluid flow of the device 1 system rather than individual fluid flow to each fluid container. In this way, the device 1 may assume that overfilling one fluid containers may supply fluid into an underfilled fluid container.

If the device 1 or method 200 is unable to refill with fluid beyond a predetermined threshold (e.g. 95 %), the device 1 may automatically drain all of the fluid containers, optionally assisted by a vacuum. Once all of the fluid is drained, the device 1 may automatically attempt to hold an air pressure target for a predetermined time, and if unable, may detect a fault in the system and send an alert to a service technician. Next, the device 1 may automatically attempts to refill the fluid. As described, the device 1 may automatically refill using different fluid ports.

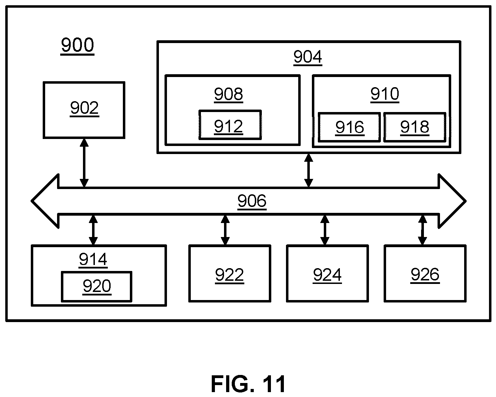

The above-described methods are typically computer-implemented. **FIG. 10** is an exemplary logic diagram of a controller and **FIG. 11** is a schematic diagram of a computer system 900 for implementing examples disclosed herein. The computer system 900 may be, or may comprise, the controller 50 described herein. The computer system 900 is adapted to execute instructions from a computer-readable medium to perform these and/or any of the functions or processing described herein. The computer system 900 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 900 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 900 may comprise at least one computing device or electronic device capable of including firmware, hardware, and/or executing software instructions to implement the functionality described herein. The computer system 900 may include processing circuitry 902 (e.g., processing circuitry including one or more processor devices or control units), a memory 904, and a system bus 906. The computer system 900 may include at least one computing device having the processing circuitry 902. The system bus 906 provides an interface for system components including, but not limited to, the memory 904 and the processing circuitry 902. The processing circuitry 902 may include any number of hardware components for conducting data or signal processing or for executing computer code stored in memory 904. The processing circuitry 902 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 902 may further include computer executable code that controls operation of the programmable device.

The system bus 906 may be any of several types of bus structures that may further interconnect to a memory bus (with or without a memory controller), a peripheral bus, and/or a local bus using any of a variety of bus architectures. The memory 904 may be one or more devices for storing data and/or computer code for completing or facilitating methods described herein. The memory 904 may include database components, object code components, script components, or other types of information structure for supporting the various activities herein. Any distributed or local memory device may be utilized with the systems and methods of this description. The memory 904 may be communicably connected to the processing circuitry 902 (e.g., via a circuit or any other wired, wireless, or network connection) and may include computer code for executing one or more processes described herein. The memory 904 may include non-volatile memory 908 (e.g., read-only memory (ROM), erasable programmable read-only memory (EPROM), electrically erasable programmable read-only memory (EEPROM), etc.), and volatile memory 910 (e.g., random-access memory (RAM)), or any other medium which can be used to carry or store desired program code in the form of machine-executable instructions or data structures and which can be accessed by a computer or other machine with processing circuitry 902. A basic input/output system (BIOS) 912 may be stored in the non-volatile memory 908 and can include the basic routines that help to transfer information between elements within the computer system 900.

The computer system 900 may further include or be coupled to a non-transitory computer-readable storage medium such as a storage device 914, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 914 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 914 and/or in the volatile memory 910, which may include an operating system 916 and/or one or more program modules 918. All or a portion of the examples disclosed herein may be implemented as a computer program 920 stored on a transitory or non-transitory computer-usable or computer-readable storage medium (e.g., single medium or multiple media), such as the storage device 914, which includes complex programming instructions (e.g., complex computer-readable program code) to cause the processing circuitry 902 to carry out actions described herein. Thus, the computer-readable program code of the computer program 920 can comprise software instructions for implementing the functionality of the examples described herein when executed by the processing circuitry 902. In some examples, the storage device 914 may be a computer program product (e.g., readable storage medium) storing the computer program 920 thereon, where at least a portion of a computer program 920 may be loadable (e.g., into a processor) for implementing the functionality of the examples described herein when executed by the processing circuitry 902. The processing circuitry 902 may serve as a controller or control system for the computer system 900 that is to implement the functionality described herein.

The computer system 900 may include an input device interface 922 (as exemplified in **FIG. 7** to **FIG. 9**) configured to receive input and selections to be communicated to the computer system 900 when executing instructions, such as from a keyboard, mouse, touch-sensitive surface, etc. Such input devices may be connected to the processing circuitry 902 through the input device interface 922 coupled to the system bus 906 but can be connected through other interfaces, such as a parallel port, an Institute of Electrical and Electronic Engineers (IEEE) 1394 serial port, a Universal Serial Bus (USB) port, an IR interface, and the like. The computer system 900 may include an output device interface 924 configured to forward output, such as to a display, a video display unit (e.g., a liquid crystal display (LCD) or a cathode ray tube (CRT)). The computer system 900 may include a communications interface 926 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

According to certain examples there is also disclosed:
Example 1. A device (1) for exchanging vehicle fluids (111, 121), comprising
   - a first fluid port (10) to connect to a first assembly (110) of a vehicle (100), the first assembly (110) containing a first vehicle fluid (111),
   - a second fluid port (20) to connect to a second assembly (120) of the vehicle (100), the second assembly (120) containing a second vehicle fluid (121),
   - a first fluid control arrangement (12) configured to selectively permit fluid flow from the first assembly (110) to the first fluid port (10) and to selectively permit fluid flow from the first fluid port (10) to the first assembly (110), and
   - a second fluid control arrangement (22) configured to selectively permit fluid flow from the second assembly (120) to the second fluid port (20) and to selectively permit fluid flow from the second fluid port (20) to the second assembly (120).
Example 2. The device (1) of example 1, comprising a controller (50) configured to control the first and second fluid control arrangements (12, 22).
Example 3. The device (1) of example 2, wherein the controller (50) or the first fluid control arrangement (12) is further configured to measure a first drain amount of fluid from the first assembly (110) to the first fluid port (10), and to measure a first fill amount of fluid from the first fluid port (10) to the first assembly (110).
Example 4. The device (1) of example 2 or 3, wherein the controller (50) is configured to control the first fluid control arrangement (12) such that the first fill amount substantially equals the first drain amount.
Example 5. The device (1) according to any of examples 2 to 4, wherein the controller (50) or the first fluid control arrangement (12) is configured to measure a first drain rate from the first assembly (110) to the first fluid port (10), and to measure a first fill rate from the first fluid port (10) to the first assembly (110).
Example 6. The device (1) of example 5, wherein the controller (50) is configured to control the first fluid control arrangement (12) such that the first fill rate substantially equals the first drain rate.
Example 7. The device (1) according to any of examples 2 to 6, wherein the controller (50) or the second fluid control arrangement (22) is configured to measure a second drain amount of fluid from the second assembly (120) to the second fluid port (20), and to measure a second fill amount of fluid from the second fluid port (20) to the second assembly (120).
Example 8. The device (1) of example 4 and 7, wherein the controller (50) is configured to control the second fluid control arrangement (22) such that the second fill amount substantially equals the second drain amount.
Example 9. The device (1) of example 5 and any preceding example, wherein the controller (50) or the second fluid control arrangement (22) is configured to measure a second drain rate from the second assembly (120) to the second fluid port (20), and to measure a second fill rate from the second fluid port (20) to the second assembly (120).
Example 10. The device (1) of example 9, wherein the controller (50) is configured such that a drain ratio between the first drain rate and the second drain rate substantially equals a fill ratio between the first fill rate and the second fill rate.
Example 11. The device (1) of any preceding example, wherein the first fluid control arrangement (12) is configured to measure a pressure of the fluid flow from the first fluid port (10) to the first assembly (110), and the second fluid control arrangement (22) is configured to measure a pressure of the fluid flow from the second fluid port (20) to the second assembly (120).
Example 12. The device (1) of example 11, wherein the controller (50) is configured to control the first and second fluid control arrangements (12, 22) based on the pressures measured by the fluid control arrangements (12, 22).
Example 13. The device (1) of any preceding example, wherein the vehicle (100) comprises a fluid manifold (190) to which the first assembly (110) and the second assembly (120) are connected, the fluid manifold (190) having a manifold bleed valve (192),
   the device (1) comprises a supplementary fluid port (19) to connect to the fluid manifold (190), and wherein
   the device (1) is configured to selectively permit a fluid flow from the first fluid port (10) to the first assembly (110) or permit a fluid flow from the supplementary fluid port (19) to the first assembly (110) via the fluid manifold (190).
Example 14. The device (1) of any preceding example, comprising a pneumatic input (3) for connection to a compressor and configured to supply pressurized air from the first fluid port (10) to the first assembly (110) to the first assembly (110) or from the second fluid port (20) to the second assembly (120).
Example 15. The device (1) of any preceding example, wherein the vehicle fluids (111, 121) are coolants, the first assembly (110) is a first battery unit, the second assembly (120) is a second battery unit.
Example 16. The device (1) of example 15, comprising a reservoir fluid port (90) to connect to a coolant reservoir.
Example 17. The device (1) of any preceding example, comprising an electric input (5) for connection to an electrical power source.
Example 18. The device (1) of any preceding example, configured to measure a total drain amount that comprises a first drain amount of fluid drained from the first assembly (110) to the first fluid port (10) and a second drain amount of fluid drained from the second assembly (120) to the second fluid port (20).
Example 19. The device (1) of example 18, configured to fill a total fill amount that comprises a first fill amount of fluid filled from the first fluid port (10) to the first assembly (110) and a second fill amount of fluid filled from the second fluid port (20) to the second assembly (120), wherein the total fill amount is at least 95 percent of the total drain amount.
Example 20. A method (200) of exchanging vehicle fluids using a device (1) of any preceding example, the method (200) comprising
   first draining (220) the first vehicle fluid (111) from the first assembly (110) to the first fluid port (10),
   second draining (230) the second vehicle fluid (121) from the second assembly (120) to the second fluid port (20), and
   first filling (240) a fluid from the first fluid port (10) to the first assembly (110), and second filling (250) a fluid from second fluid port (20) to the second assembly (120).
Example 21. The method (200) of example 20, wherein
   first draining (220) the first vehicle fluid (111) from the first assembly (110) to the first fluid port (10) comprises measuring the drain amount of first vehicle fluid (111), and
   first filling (240) a fluid from the first fluid port (10) to the first assembly (110) comprises measuring the filled amount of fluid.
Example 22. The method (200) of example 20 or 21, wherein
   first draining (220) the first vehicle fluid (111) from the first assembly (110) to the first fluid port (10), and
   second draining (230) the second vehicle fluid (121) from the second assembly (120) to the second fluid port (20),
   are initiated simultaneously.
Example 23. The method (200) of example 22, wherein
   first filling (240) a fluid from the first fluid port (10) to the first assembly (110), and second filling (250) a fluid from second fluid port (20) to the second assembly (120). are initiated consecutively.
Example 24. The method (200) of example 23, wherein
   the vehicle (100) comprises a fluid manifold (190) to which the first assembly (110) and the second assembly (120) are connected, the fluid manifold (190) having a manifold bleed valve (192),
   the device (1) comprises a supplementary fluid port (19) for connection to the fluid manifold (190), and wherein
   first filling (240) a fluid from the first fluid port (10) to the first assembly (110) comprises alternatingly filling the first assembly (110) via the first fluid port (10) and via the supplementary fluid port (19).
Example 25. The method (200) according to any of examples 20 to 24, wherein first draining (220) the first vehicle fluid (111) from the first assembly (110) to the first fluid port (10) comprises supplying (225) pressurized gas, such as air, to the first assembly (110).
Example 26. The method (200) according to example 25, wherein supplying (225) pressurized gas to the first assembly (110) comprises supplying (225) pressurized gas to the first assembly (110) via another port than the first fluid port (10).
Example 27. The method (200) according to any of examples 20 to 26, wherein first filling (240) a fluid from the first fluid port (10) to the first assembly (110) comprises first pressure measuring (241) a pressure of the fluid flow from first fluid port (10) to the first assembly (110).
Example 28. The method (200) according example 27, wherein first filling (240) a fluid from the first fluid port (10) to the first assembly (110) comprises first detecting (242) a pressure anomaly based on the first pressure measuring (241).
Example 29. The method (200) according example 28, wherein first filling (240) a fluid from the first fluid port (10) to the first assembly (110) comprises first stopping (243) the first filling based on the first detecting (242).
Example 30. The method (200) according example 29, wherein first filling (240) a fluid from the first fluid port (10) to the first assembly (110) comprises first generating (244) a first message to an operator in connection with first stopping (243) the first filling.
Example 31. The method (200) according any of examples 27 to 30, wherein first filling (240) a fluid from the first fluid port (10) to the first assembly (110) comprises first alternatingly filling (245) the first assembly (110) via another port of the device (1).
Example 32. The method (200) according to any of examples 20 to 31, comprising generating (226, 246) a bleed message to an operator in connection with first draining (220) the first vehicle fluid (111) from the first assembly (110) to the first fluid port (10), or in connection with first filling (240) a fluid from the first fluid port (10) to the first assembly (110).
Example 33. The method (200) according to any of examples 20 to 32, comprising measuring a total drain amount that comprises a first drain amount of fluid drained from the first assembly (110) to the first fluid port (10) and a second drain amount of fluid drained from the second assembly (120) to the second fluid port (20).
Example 34. The method (200) of example 33, comprising filling a total fill amount that comprises a first fill amount of fluid filled from the first fluid port (10) to the first assembly (110) and a second fill amount of fluid filled from the second fluid port (20) to the second assembly (120), wherein the total fill amount is at least 95 percent of the total drain amount.
Example 35. The method (200) according to any of examples 20 to 34, comprising connecting (210) the first fluid port (10) to the first assembly (110) and the second fluid port (20) to the second assembly (120).
Example 36. The method (200) according to any of examples 20 to 34, wherein the method is computer-implemented.
Example 37. A computer program product comprising program code for performing, when executed by a processor device of a controller (50), the computer-implemented method (200) of exchanging vehicle fluids of example 36.
Example 38. A non-transitory computer-readable storage medium comprising instructions, which when executed by a processor device of a controller (50), cause the processing circuitry to perform the computer-implemented method (200) of exchanging vehicle fluids of example 36.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A device (1) for exchanging vehicle fluids (111, 121), comprising
- a first fluid port (10) to connect to a first assembly (110) of a vehicle (100), the first assembly (110) containing a first vehicle fluid (111),
- a second fluid port (20) to connect to a second assembly (120) of the vehicle (100), the second assembly (120) containing a second vehicle fluid (121),
- a first fluid control arrangement (12) configured to selectively permit fluid flow from the first assembly (110) to the first fluid port (10) and to selectively permit fluid flow from the first fluid port (10) to the first assembly (110), and
- a second fluid control arrangement (22) configured to selectively permit fluid flow from the second assembly (120) to the second fluid port (20) and to selectively permit fluid flow from the second fluid port (20) to the second assembly (120).

2. The device (1) of claim 1, comprising a controller (50) configured to control the first and second fluid control arrangements (12, 22), wherein the controller (50) or the first fluid control arrangement (12) is further configured to measure a first drain amount of fluid from the first assembly (110) to the first fluid port (10), and to measure a first fill amount of fluid from the first fluid port (10) to the first assembly (110).

3. The device (1) of claim 2, wherein the controller (50) is configured to control the first fluid control arrangement (12) such that the first fill amount substantially equals the first drain amount.

4. The device (1) of claim 2 or 3, wherein the controller (50) or the first fluid control arrangement (12) is configured to measure a first drain rate from the first assembly (110) to the first fluid port (10), and to measure a first fill rate from the first fluid port (10) to the first assembly (110).

5. The device (1) of claim 4, wherein the controller (50) is configured to control the first fluid control arrangement (12) such that the first fill rate substantially equals the first drain rate.

6. The device (1) according to any of claims 2 to 5, wherein the controller (50) or the second fluid control arrangement (22) is configured to measure a second drain amount of fluid from the second assembly (120) to the second fluid port (20), and to measure a second fill amount of fluid from the second fluid port (20) to the second assembly (120).

7. The device (1) of claim 3 and 6, wherein the controller (50) is configured to control the second fluid control arrangement (22) such that the second fill amount substantially equals the second drain amount.

8. The device (1) of any preceding claim, configured to measure a total drain amount that comprises a first drain amount of fluid drained from the first assembly (110) to the first fluid port (10) and a second drain amount of fluid drained from the second assembly (120) to the second fluid port (20).

9. The device (1) of claim 8, configured to fill a total fill amount that comprises a first fill amount of fluid filled from the first fluid port (10) to the first assembly (110) and a second fill amount of fluid filled from the second fluid port (20) to the second assembly (120), wherein the total fill amount is at least 95 percent of the total drain amount.

10. The device (1) of claim 4 and any preceding claim, wherein the controller (50) or the second fluid control arrangement (22) is configured to measure a second drain rate from the second assembly (120) to the second fluid port (20), and to measure a second fill rate from the second fluid port (20) to the second assembly (120).

11. The device (1) of claim 10, wherein the controller (50) is configured such that a drain ratio between the first drain rate and the second drain rate substantially equals a fill ratio between the first fill rate and the second fill rate.

12. The device (1) of any preceding claim, wherein the first fluid control arrangement (12) is configured to measure a pressure of the fluid flow from the first fluid port (10) to the first assembly (110), the second fluid control arrangement (22) is configured to measure a pressure of the fluid flow from the second fluid port (20) to the second assembly (120), and wherein the first and second fluid control arrangements (12, 22) are controlled based on the pressures of said fluid flows.

13. The device (1) of any preceding claim, wherein
the vehicle (100) comprises a fluid manifold (190) to which the first assembly (110) and the second assembly (120) are connected, the fluid manifold (190) having a manifold bleed valve (192),
the device (1) comprises a supplementary fluid port (19) to connect to the fluid manifold (190), and wherein
the device (1) is configured to selectively permit a fluid flow from the first fluid port (10) to the first assembly (110) or permit a fluid flow from the supplementary fluid port (19) to the first assembly (110) via the fluid manifold (190).

14. The device (1) according to claim 9 and 12, wherein the vehicle fluids (111, 121) are coolants, the first assembly (110) is a first battery unit, the second assembly (120) is a second battery unit, and wherein the device (1) comprises an electric input (5) for connection to an electrical power source.

15. A method (200) of exchanging vehicle fluids using a device (1) of any preceding claim, the method (200) comprising
first draining (220) the first vehicle fluid (111) from the first assembly (110) to the first fluid port (10),
second draining (230) the second vehicle fluid (121) from the second assembly (120) to the second fluid port (20),
first filling (240) a fluid from the first fluid port (10) to the first assembly (110), and second filling (250) a fluid from second fluid port (20) to the second assembly (120).
